Europäisches Patentamt

European Patent Office

Office européen des brevets

(19)

(11) **EP 1 201 498 A1**

(12) **DEMANDE DE BREVET EUROPEEN**

(43) Date de publication:
**02.05.2002 Bulletin 2002/18**

(51) Int Cl.⁷: **B60Q 1/08**

(21) Numéro de dépôt: **01402781.7**

(22) Date de dépôt: **25.10.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **27.10.2000 FR 0013890**

(71) Demandeur: **VALEO VISION**
**93012 Bobigny Cédex (FR)**

(72) Inventeurs:
- **Leleve, Joel**
**93012 Bobigny Cedex (FR)**
- **Couillaud, Philippe**
**93012 Bobigny Cedex (FR)**

(54) **Dispositif de correction automatique de l'orientation en site d'un projecteur de véhicule automobile**

(57)     La présente invention concerne un dispositif de correction automatique de l'orientation d'au moins un projecteur (P) de véhicule automobile (V) lors des variations d'assiette du véhicule automobile (V), comportant

- un émetteur (1) projetant sur le sol devant le véhicule (V) deux taches lumineuses ($T_1$, $T_2$) espacées dans une direction parallèle à l'axe longitudinal du véhicule (V),
- un capteur (2) de l'éclairement des taches lumineuses ($T_1$, $T_2$) comprenant un objectif (3) formant une image ($I_1$, $I_2$) des taches lumineuses ($T_1$, $T_2$) sur un

récepteur (6) et fournissant pour chacune un signal de sortie ($dc_1$, $dc_2$),
- des moyens de traitement (5) propres à élaborer un signal de commande à partir du signal de sortie du capteur (2), et
- un actionneur (4) commandé par le signal de commande et apte à modifier l'orientation en site d'un réflecteur (R) du projecteur (P).

Selon la présente invention, le signal de commande de l'actionneur (4) est élaboré par les moyens de traitement (5) à partir d'une fonction linéaire des signaux de sortie ($dc_1$, $dc_2$) fournis par le capteur (2) pour chaque image ($I_1$, $I_2$) de chaque tache lumineuse ($T_1$, $T_2$).

FIG.2

EP 1 201 498 A1

EP 1 201 498 A1

**Description**

La présente invention concerne les dispositifs de correction automatique de l'orientation en site de projecteurs de véhicules automobiles, lors des variations d'assiette de ces derniers.

On sait que la réglementation impose que les projecteurs d'un véhicule soient réglés pour éclairer efficacement la route en avant du véhicule sans toutefois éblouir les autres conducteurs. Par exemple, la coupure supérieure d'un faisceau de croisement européen doit être inclinée sur l'horizontale avec un angle de rabattement compris entre 1 et 1,5 centième de radian.

Cependant, lorsque le véhicule est chargé, ou lorsqu'il accélère ou décélère, l'assiette du véhicule peut varier dans de larges proportions, et l'orientation des projecteurs n'est alors plus conforme à la législation : la coupure est soit relevée et les projecteurs éblouissent les autres conducteurs, soit rabattue et l'éclairage est totalement insuffisant.

Une solution a d'abord été de disposer des capteurs au voisinage de chaque roue du véhicule afin d'en déterminer l'assiette, les informations issues de ces capteurs étant traitées par un calculateur afin de commander convenablement un dispositif de réglage de l'orientation des projecteurs. Une telle solution impose de disposer des capteurs de roues en des endroits du véhicule où la place disponible est mesurée et des câblages supplémentaires dans le véhicule, les capteurs de roues étant de plus soumis à toutes les agressions de l'environnement extérieur, de sorte qu'ils doivent posséder une excellente protection.

On connaît également, par exemple par le document US-A-5 193 894, des dispositifs de correction automatique sans câblage. Le dispositif décrit dans ce document comprend des cellules photosensibles qui détectent les variations de luminance de zones de sol devant le véhicule, éclairées par le projecteur. Des moyens de traitement élaborent, à partir des mesures de ces cellules, un signal pour la commande d'un actionneur propre à faire varier l'inclinaison du projecteur.

L'inconvénient majeur de tels dispositifs réside dans le fait qu'ils sont fortement perturbés par les éclairages externes tels que les éclairages publics ou les projecteurs d'autres véhicules. Les mesures effectuées par les photocellules dépendent également fortement de la nature plus ou moins réfléchissante des surfaces éclairées devant le véhicule. Le réglage obtenu dans ces conditions n'est donc pas constant, et subit des écarts sensibles selon l'environnement du véhicule.

Il a été proposé, par exemple dans le document FR-A-2 759 043, de remédier à ces inconvénients en proposant une installation de réglage de la portée d'éclairage des projecteurs d'un véhicule, comprenant une installation d'émission qui émet au moins un faisceau de rayons électromagnétiques tombant sur une zone à l'avant du véhicule, une installation de détection électro-optique qui donne au moins de la zone irradiée un point image, une installation d'exploitation qui exploite la position d'au moins une zone irradiée et en déduit un signal comparé à un signal de consigne représentant le réglage correct de la portée d'éclairage, et, en cas de déviation entre le signal actuel et le signal de consigne, des installations de réglage sont commandées pour supprimer cette déviation.

Une telle installation, si elle résout le problème des éclairages parasites et des états de surface du revêtement routier, présente encore des inconvénients. En effet, la mesure effectuée par cette installation revient à analyser le déplacement d'une tache lumineuse sur le sol en avant d'un véhicule. On comprend donc que, pour une assiette constante du véhicule, la mesure sera perturbée par la variation de la hauteur du véhicule, c'est à dire lors des mouvements de compression ou d'expansion simultanée de tous les éléments de la suspension du véhicule, qui impriment à la caisse du véhicule des mouvements de translation verticale pure. Lors de tels mouvements de translation verticale, la tache lumineuse en avant du véhicule se déplace, et ce d'autant plus que la zone éclairée est plus éloignée du véhicule. Le déplacement de la tache lumineuse est alors interprété par l'installation d'exploitation comme un changement d'assiette, cette dernière générant alors pour les installations de réglage un signal de correction erroné.

La présente invention se place dans ce contexte et elle a pour but de proposer un dispositif de correction automatique de l'orientation en site des projecteurs d'un véhicule automobile lors des variations d'assiette de ce dernier, qui ne nécessite pas l'installation de capteurs de roues ni leur câblage, qui soit insensible aux variations de hauteur du véhicule, qui soit simple à mettre en oeuvre et fiable, tout en étant peu onéreux.

La présente invention a donc pour objet un dispositif de correction automatique de l'orientation d'au moins un projecteur de véhicule automobile lors des variations d'assiette du véhicule automobile, comportant

- un émetteur projetant sur le sol devant le véhicule deux taches lumineuses espacées dans une direction parallèle à l'axe longitudinal du véhicule,
- un capteur de l'éclairement des taches lumineuses comprenant un objectif formant une image des taches lumineuses sur un récepteur et fournissant pour chacune un signal de sortie,
- des moyens de traitement propres à élaborer un signal de commande à partir du signal de sortie du capteur, et
- un actionneur commandé par le signal de commande et apte à modifier l'orientation en site d'un réflecteur du projecteur.

2

Selon la présente invention, le signal de commande de l'actionneur est élaboré par les moyens de traitement à partir d'une fonction linéaire des signaux de sortie fournis par le capteur pour chaque image de chaque tache lumineuse.

Selon d'autres caractéristiques avantageuses et non limitatives de l'invention :

- la fonction linéaire entre les signaux de sortie du capteur pour chaque image de chaque tache lumineuse est de la forme $dc_1 - a \times dc_2 = K \times (\theta - \theta_0) + b$, où a, b et $\theta_0$ sont des constantes caractéristiques de la géométrie du dispositif de correction, $\theta$ un angle représentatif de l'assiette du véhicule, et où K est une grandeur représentative de la hauteur du véhicule ;
- l'émetteur et le capteur sont fixes l'un par rapport à l'autre ;
- l'émetteur et le capteur sont solidaires d'une partie mobile du véhicule ;
- la partie mobile du véhicule est constituée par le réflecteur d'un projecteur du véhicule ;
- l'émetteur et le capteur sont fixes par rapport au véhicule ;
- l'émetteur et le capteur sont situés l'un sur une partie fixe du véhicule, l'autre sur une partie mobile du véhicule ;
- les taches lumineuses définissent un segment de droite sensiblement parallèle à l'axe longitudinal du véhicule ;
- l'émetteur et le capteur sont situés sensiblement dans un même plan vertical ;
- la direction d'illumination de l'émetteur et l'axe optique du capteur sont contenus dans un même plan vertical parallèle à l'axe longitudinal du véhicule.

D'autres buts, caractéristiques et avantages de la présente invention ressortiront clairement de la description qui va maintenant être faite d'un exemple de réalisation donné à titre non limitatif en référence aux dessins annexés sur lesquels :

- La Figure 1 représente une vue schématique de l'avant d'un véhicule illustrant le principe de l'invention selon un premier mode de réalisation ;
- La Figure 2 représente un schéma de principe de fonctionnement du dispositif de correction selon le premier mode de réalisation ;
- La Figure 3 représente sous forme graphique le signal délivré par le capteur équipant le dispositif de l'invention ;
- La Figure 4 représente un exemple de réseau de courbes élaborées par les moyens de traitement équipant le dispositif de l'invention ;
- La Figure 5 représente une vue schématique de l'avant d'un véhicule illustrant le principe de l'invention selon un deuxième mode de réalisation ;
- La Figure 6 représente une vue schématique de l'avant d'un véhicule illustrant le principe de l'invention selon un troisième mode de réalisation, et
- La Figure 7 représente un schéma général de principe de fonctionnement du dispositif de correction selon la présente invention.

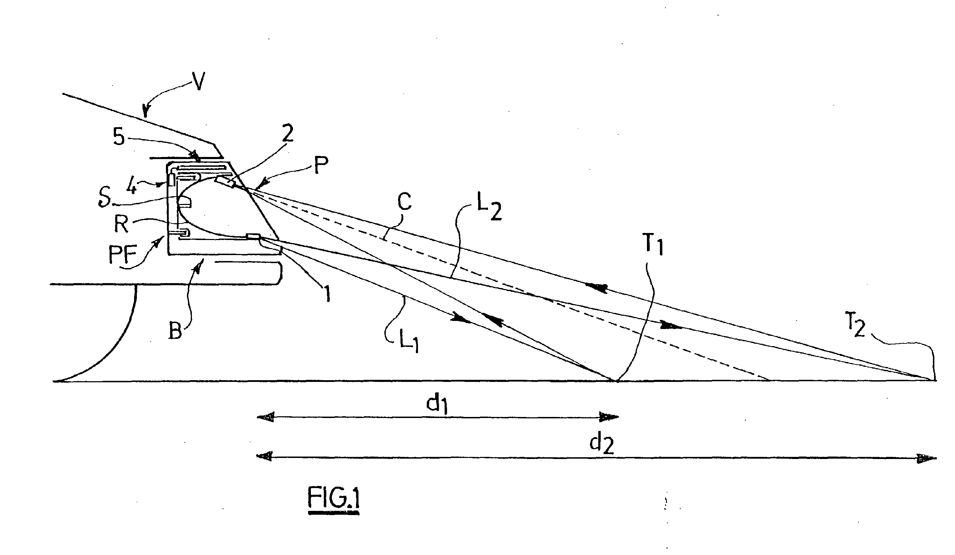

On a représenté schématiquement sur la Figure 1 l'avant d'un véhicule V, muni de manière classique de projecteurs P, un seul projecteur ayant été représenté. Le projecteur P comporte un réflecteur R coopérant avec une source lumineuse S solidaire de ce dernier pour former un faisceau lumineux d'éclairage de la route devant le véhicule V. Dans le cas où le projecteur P est destiné à émettre un faisceau de croisement, le réflecteur R pourra être de type apte à engendrer par lui-même un faisceau avec coupure, ou être de type elliptique, en étant solidaire d'une lentille convergente dont le foyer objet est confondu avec l'un des foyers du réflecteur elliptique dont l'autre foyer est situé au voisinage immédiat de la source lumineuse S.

Dans le mode de réalisation de la Figure 1, un émetteur 1 est solidaire du réflecteur R, de même qu'un capteur 2. L'émetteur 1 projette sur le sol en avant du véhicule V deux taches lumineuses $T_1$ et $T_2$, à des distances différentes $d_1$ et $d_2$, les taches $T_1$ et $T_2$ définissant un segment de droite parallèle à l'axe longitudinal du véhicule. Ces taches $T_1$ et $T_2$ sont situées dans le champ de vision C du capteur 2. L'émetteur 1 et le capteur 2 sont situés sensiblement dans un même plan vertical parallèle à l'axe longitudinal du véhicule, et la direction d'illumination de l'émetteur 1 et l'axe optique du capteur 2 sont contenus dans ce plan, par exemple le plan de la Figure 1.

Lors des changements d'assiette du véhicule V, les taches $T_1$ et $T_2$ se déplacent sur le sol, ces déplacements étant observés par le capteur 2, qui délivre un signal correspondant, ce signal étant fourni à des moyens de traitement 5, par exemple un calculateur ou un microprocesseur, qui déterminent si une correction de l'orientation du projecteur est nécessaire. Dans l'affirmative, un signal de commande est généré par le calculateur 5 pour piloter dans un sens ou dans un autre un actionneur 4. L'actionneur 4 est situé dans le boîtier B du projecteur P et provoque le basculement du réflecteur R autour d'un point fixe PF du boîtier B, ce qui modifie l'inclinaison du réflecteur R, et donc celle du faisceau lumineux engendré par ce dernier. L'émetteur 1 étant solidaire du réflecteur R, le mouvement de ce dernier entraîne le déplacement des taches $T_1$ et $T_2$ sur le sol, qui est observé par le capteur C.

Le basculement du réflecteur se poursuit jusqu'à ce que les taches $T_1$ et $T_2$ occupent leur position de référence par rapport à l'horizontale, et correspondant à une inclinaison correcte du faisceau lumineux, malgré le changement de l'assiette du véhicule. La correction de l'orientation en site du projecteur P peut ainsi être obtenue de manière dynamique, cette correction s'effectuant en boucle fermée.

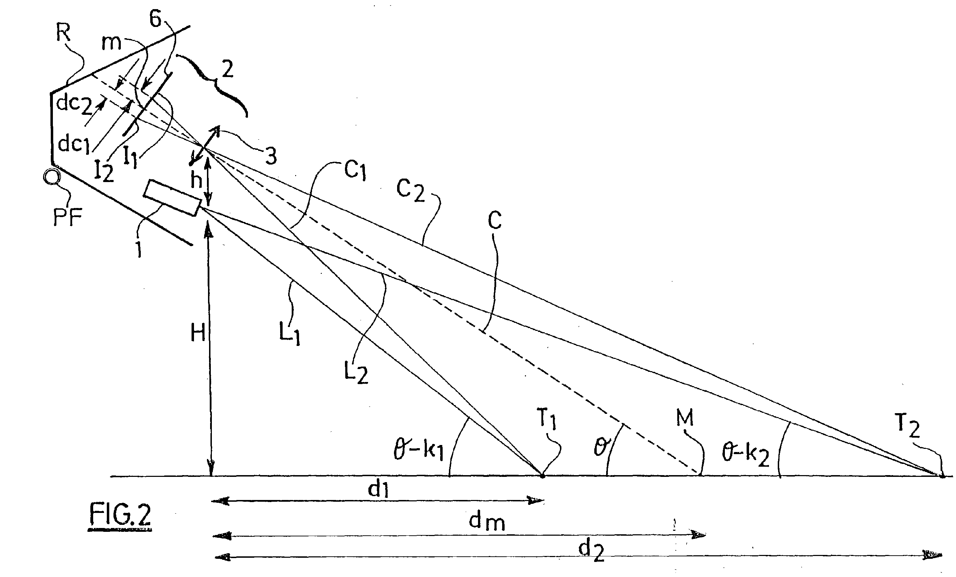

De manière plus précise, comme on l'a représenté sur la Figure 2, l'émetteur 1, placé à une hauteur H au dessus de la route, émet deux pinceaux lumineux $L_1$ et $L_2$ pour former les taches $T_1$ et $T_2$ sur la route en avant du véhicule, à des distances $d_1$ et $d_2$ de la verticale de l'émetteur 1. Le capteur 2, placé à une hauteur h au dessus de l'émetteur 1, comprend un objectif 3 formant des taches $T_1$ et $T_2$ des images $I_1$ et $I_2$ sur une surface photosensible 6. L'objectif 3 définit l'axe optique C du capteur.

L'émetteur 1 et le capteur 2 sont solidaires l'un de l'autre et du réflecteur R. Le capteur 1 mesure donc l'assiette du réflecteur R. L'émetteur 1 et le capteur 2 sont orientés de telle façon que, lorsque l'orientation du réflecteur R est réglementaire ou nominale, l'axe optique C du capteur intercepte la route en un point M situé à une distance $d_m$ de la verticale de l'émetteur 1, sensiblement au milieu du segment de droite compris entre les taches $T_1$ et $T_2$. Les taches $T_1$ et $T_2$ sont vues par le capteur 2 dans des directions $C_1$ et $C_2$. L'axe optique C forme un angle $\theta$ avec la route, et les pinceaux lumineux $L_1$ et $L_2$ forment respectivement des angles $(\theta - k_1)$ et $(\theta - k_2)$ avec la route, $k_1$ et $k_2$ étant les angles formés respectivement entre $L_1$ et C, et entre $L_2$ et C.

L'objectif 3 du capteur 2 peut être analysé comme équivalent à une lentille convergente, de longueur focale f. Cet objectif 3 forme sur la surface photosensible 6 des images $I_1$ et $I_2$ des taches $T_1$ et $T_2$, ces images $I_1$ et $I_2$ étant respectivement à des distances $dc_1$ et $dc_2$ du centre m de la surface 6, correspondant à l'intersection entre la surface 6 et l'axe optique C.

Des considérations géométriques permettent de déterminer les distances $dc_1$ et $dc_2$. On obtient ainsi les formules :

$$dc_1 = f \times \frac{- H \times \tan(k_1) \times \tan^2(\theta) + h \times \tan(\theta) - (h + H) \times \tan(k_1)}{(h + H) \times \tan^2(\theta) - h \times \tan(k_1) \times \tan(\theta) + H} \tag{1}$$

et

$$dc_2 = f \times \frac{- H \times \tan(k_2) \times \tan^2(\theta) + h \times \tan(\theta) - (h + H) \times \tan(k_2)}{(h + H) \times \tan^2(\theta) - h \times \tan(k_2) \times \tan(\theta) + H} \tag{2}$$

On peut d'autre part déterminer les constantes $k_1$ et $k_2$, caractéristiques de la géométrie particulière du dispositif utilisé, telles que :

$$\tan(k_1) = \frac{d_{10} \times (h + H_0) - H_0 \times d_{m0}}{H_0 \times (h + H_0) + d_{10} \times d_{m0}} \tag{3}$$

et

$$\tan(k_2) = \frac{d_{20} \times (h + H_0) - H_0 \times d_{m0}}{H_0 \times (h + H_0) + d_{20} \times d_{m0}} \tag{4}$$

où $d_{10}$, $d_{20}$, $d_{m0}$ et $H_0$ sont les valeurs initiales nominales de $d_1$, $d_2$, $d_m$ et H. Ces valeurs initiales nominales sont obtenues pour un véhicule à vide, l'inclinaison du projecteur P étant correctement réglée.

Il ressort bien des formules (1) et (2) que $dc_1$ et $dc_2$ ne sont des fonctions que de la hauteur H de l'émetteur 1, et par conséquent du véhicule, et de l'angle $\theta$ d'inclinaison du capteur 2 par rapport à la route, et par conséquent de l'assiette du véhicule.

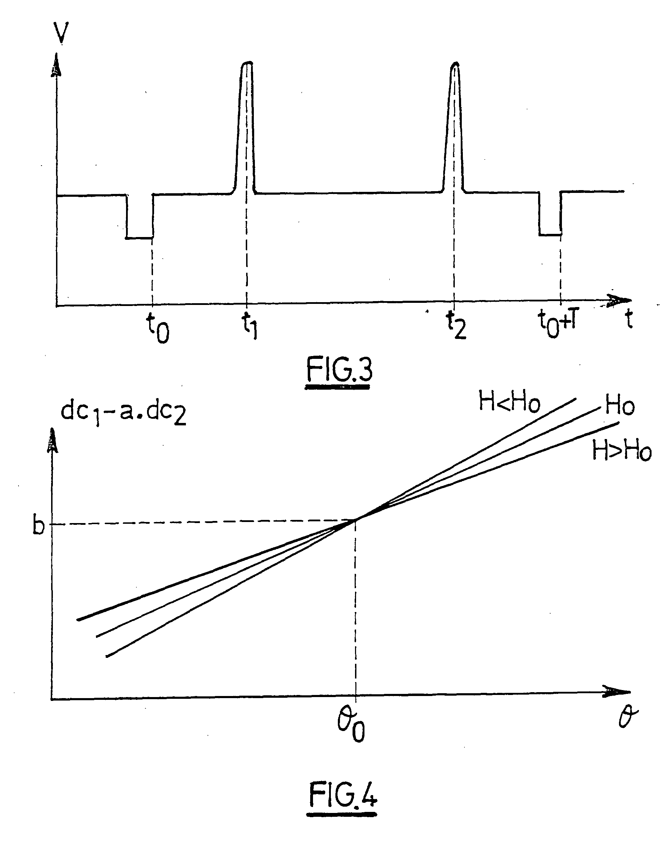

La surface photosensible 6 sur laquelle sont formées les images $I_1$ et $I_2$ est avantageusement constituée d'une barrette CCD (éléments à couplage de charges). Lors du balayage des éléments de cette barrette par des moyens électroniques appropriés, le signal obtenu est de la forme qui est représentée sur la Figure 3, chaque image $I_1$ et $I_2$ située à la distance $dc_1$ et $dc_2$ du centre m de la surface 6 donnant lieu à une pointe de tension aux instants $t_1$ et $t_2$. Le signal de la Figure 3 comporte par exemple une impulsion négative périodique, de période T, aux instants $t_0 + nT$, et des impulsions positives aux instants $t_1$ et $t_2$.

Le signal de la Figure 3 est fourni aux moyens de traitement 5 qui calculent, pour chaque balayage, à partir

de $t_1$ et $t_2$, les valeurs de $dc_1$ et $dc_2$, fonctions de la hauteur H et de l'angle $\theta$ comme on l'a vu plus haut.

Conformément à la présente invention, les moyens de traitement 5 élaborent une fonction linéaire de $dc_1$ et $dc_2$, de la forme :

$$dc_1 - a \times dc_2 = K \times (\theta - \theta_0) + b \qquad (5)$$

où $\theta_0$ est la valeur initiale nominale de l'angle $\theta$, obtenue pour un véhicule à vide avec un projecteur P correctement réglé en inclinaison, et ayant pour valeur :

$$\tan(\theta_0) = \frac{h + H_0}{dm_0} \qquad (6)$$

où a et b sont des constantes, de la forme :

$$a = \frac{1 - \tan(k_1) \times \tan(k_2) + \left(\tan^2(\theta_0) - 1\right) \times \dfrac{\tan(k_1)}{\tan(\theta_0)}}{1 - \tan(k_1) \times \tan(k_2) + \left(\tan^2(\theta_0) - 1\right) \times \dfrac{\tan(k_2)}{\tan(\theta_0)}} \qquad (7)$$

$$b = f \times \frac{\tan(k_2) - \tan(k_1)}{1 - \tan(k_1) \times \tan(k_2) + \left(\tan^2(\theta_0) - 1\right) \times \dfrac{\tan(k_2)}{\tan(\theta_0)}} \qquad (8)$$

et où K est une fonction de la hauteur H de l'émetteur 1.

La formule (5) s'écrit :

$$dc_1 - a \times dc_2 = b \qquad (9)$$

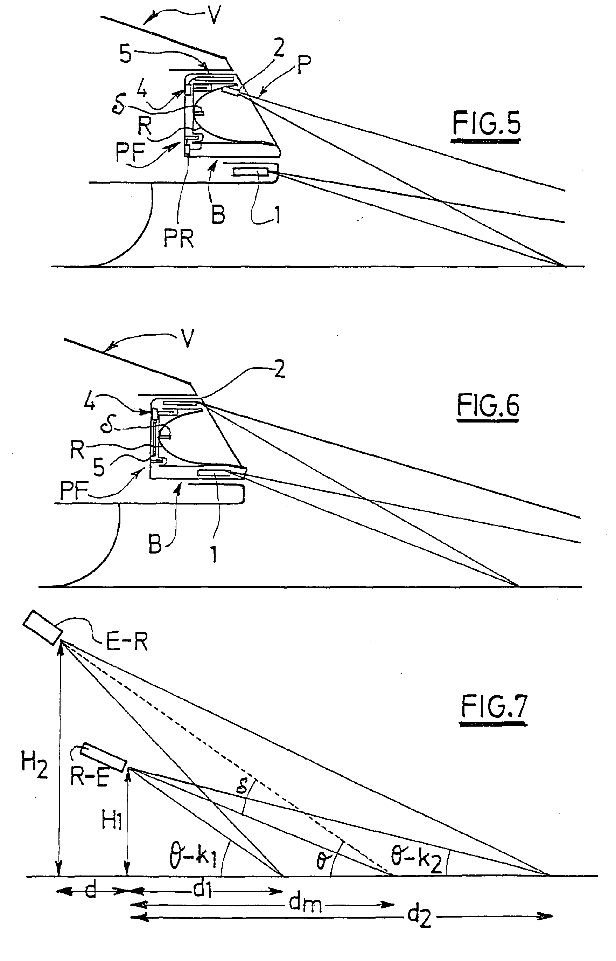

pour la valeur initiale nominale $\theta_0$ de l'angle $\theta$, et ne dépend plus de la hauteur H de l'émetteur 1. Il s'ensuit que toutes les courbes d'équation (5) passent par le même point pour la valeur initiale nominale $\theta_0$ de l'angle $\theta$, ainsi qu'on l'a représenté sur la Figure 4, quelle que soit la hauteur H de l'émetteur 1.

Comme on le voit sur la Figure 4, autour de la position initiale nominale $(\theta_0, H_0)$, la valeur de l'équation (5) est très peu dépendante de la valeur H de la hauteur de l'émetteur 1. Il suffit donc que les moyens de traitement 5 calculent la valeur de l'équation (5) et comparent le résultat à la constante b telle que définie par la relation (8). Le résultat de cette comparaison indique le sens dans lequel le projecteur P doit être actionné :

- si $dc_1 - a \times dc_2 = b$, le projecteur est correctement réglé, les moyens de traitement 5 n'émettent aucun signal,
- si $dc_1 - a \times dc_2 < b$, cela signifie que l'angle $\theta$ est inférieur à l'angle initial nominal $\theta_0$, et que le faisceau émis par le projecteur P est trop relevé. Les moyens de traitement 5 émettent alors un signal de commande pour l'actionneur 4, pour que ce dernier incline plus vers le bas le projecteur P, et
- si $dc_1 - a \times dc_2 > b$, cela signifie que l'angle $\theta$ est supérieur à l'angle initial nominal $\theta_0$, et que le faisceau émis par le projecteur P est trop abaissé. Les moyens de traitement 5 émettent alors un signal de commande pour l'actionneur 4, pour que ce dernier incline plus vers le haut le projecteur P.

Dans les deux derniers cas, tant que $dc_1 - a \times dc_2 \neq b$, les moyens de traitement émettent un signal de commande proportionnel à la valeur absolue de la différence $(dc_1 - a \times dc_2) - b$, jusqu'à ce que cette valeur absolue soit égale à zéro. L'actionneur 4 est ainsi commandé proportionnellement à l'importance de la correction à apporter à l'inclinaison du projecteur P. Il en résulte que la correction sera effectuée d'autant plus rapidement, ce qui est important pour réduire l'éblouissement éventuel des autres conducteurs dans le cas d'un faisceau lumineux trop relevé.

On a donc bien réalisé un dispositif de correction automatique de l'orientation en site de projecteurs de véhicule automobile lors des variations d'assiette de ce dernier. Les signaux de commande émis par les moyens de traitement 5 pour la correction du projecteur P pourront être utilisés par un deuxième actionneur 4' placé dans le boîtier de l'autre projecteur P' du véhicule pour corriger simultanément l'orientation des deux projecteurs à l'aide d'un seul dispositif de correction automatique, ou chaque projecteur du véhicule pourra être équipé de son propre dispositif de correction automatique. Le dispositif selon la présente invention ne nécessite aucun câblage dans le véhicule autre que pour son installation dans le boîtier du projecteur. Le dispositif corrige l'orientation en site de projecteurs de véhicule automobile uniquement lors des variations d'assiette de ce dernier, et il est insensible aux variations de hauteur du véhicule.

Un tel dispositif de correction automatique est simple à mettre en oeuvre et fiable. En effet, il suffit de disposer dans le boîtier du projecteur P un émetteur, un capteur et un actionneur, ces composants étant tous bien connus et maîtrisés, et des moyens de traitement du signal engendré par le capteur, qui peuvent se réduire à un microprocesseur convenablement programmé. Les liaisons électriques entre ces différents composants sont courtes, et entièrement contenues dans le boîtier du projecteur. De plus, la fonction linéaire que les moyens de traitement utilisent pour engendrer le signal de commande de l'actionneur 4 fait intervenir deux constantes a et b, elles-mêmes calculées à partir des constantes $d_{10}$, $d_{20}$, $d_{m0}$ et $H_0$, valeurs initiales nominales de $d_1$, $d_2$, $d_m$ et H, et des constantes géométriques h et f du dispositif.

Si les valeurs initiales nominales et les constantes géométriques du dispositif sont connues avec précision, il est alors facile de calculer théoriquement les constantes a et b, et de les mémoriser dans les moyens de traitement 5, par exemple dans une mémoire morte programmable et effaçable, du type EEPROM.

Si les valeurs initiales nominales et les constantes géométriques du dispositif ne sont pas connues, ou sont connues avec une précision insuffisante, il est possible de déterminer expérimentalement les constantes a et b. Il suffit pour cela de relever les distances $dc_1$ et $dc_2$ des images $I_1$ et $I_2$ des taches $T_1$ et $T_2$ sur la surface photosensible 6 pour deux positions particulières du véhicule, par exemple la position initiale nominale (véhicule à vide, inclinaison du projecteur correctement réglée) et une position extrême (véhicule à pleine charge, inclinaison du projecteur correctement réglée).

On peut alors procéder de la manière suivante :

- on règle manuellement l'orientation des projecteurs du véhicule, le dispositif de correction automatique étant inhibé ;
- on relève les distances des images $I_1$ et $I_2$ des taches $T_1$ et $T_2$ sur la surface photosensible 6, le véhicule étant à vide, et donc en position initiale nominale, les distances relevées étant alors égales à $dc_{10}$ et $dc_{20}$;
- on relève les distances des images $I_1$ et $I_2$ des taches $T_1$ et $T_2$ sur la surface photosensible 6, le véhicule étant à pleine charge, les distances relevées étant alors égales à leur valeur minimale $dc_{1,min}$ et $dc_2$, min ;
- on calcule

$$a = \frac{dc_{10} - dc_{1,min}}{dc_{20} - dc_{2,min}};$$

- on calcule $b = dc_{10} - a \times dc_{20}$, et
- on mémorise a et b dans les moyens de traitement 5, par exemple dans une mémoire morte programmable et effaçable, du type EEPROM.

Ces réglages, relevés et calculs peuvent avantageusement être effectués en fin de chaîne de production du véhicule automobile, lorsque ce dernier est totalement équipé et prêt à être livré. L'angle de référence $\theta$ utilisé pour la mesure peut être pris par rapport à un axe différent de l'axe optique du capteur 2, mais situé dans le champ de vision de ce dernier, si les réglages, relevés ou calculs s'en trouvent facilités.

En effet, en considérant un autre axe de référence, les distances des images $I_1$ et $I_2$ des taches $T_1$ et $T_2$ sur la surface photosensible 6 seront légèrement décalées d'une valeur $\Delta$, pour devenir : $dc'_1 = dc_1 + \Delta$ et $dc'_2 = dc_2 + \Delta$. La relation (5) s'écrit alors :

$$dc'_1 - a \times dc'_2 = K(\theta - \theta_0) + b + \Delta \times (1 - a) \tag{10}$$

et tous les calculs mentionnés plus haut peuvent être répétés sans changement.

Selon un deuxième mode de réalisation, représenté sur la Figure 5, l'émetteur 1 est implanté sur une partie fixe du véhicule, par exemple sur le boîtier du projecteur P ou sur une partie du véhicule lui-même, tandis que le capteur 2 est solidaire du réflecteur R, comme dans le mode de réalisation précédent. Un dispositif installé de cette manière fonctionne exactement comme dans le mode de réalisation précédent. Il impose seulement l'adjonction d'un appareil permettant de connaître à tout instant l'orientation relative du capteur 2 par rapport à l'émetteur 1. On pourra par exemple disposer un potentiomètre de recopie PR au voisinage du point fixe PF sur lequel est articulé le réflecteur R, les informations issues de ce potentiomètre étant fournie aux moyens de traitement pour corriger la variation de l'angle entre l'émetteur 1 et le capteur 2.

Selon un troisième mode de réalisation, représenté sur la Figure 6, l'émetteur 1 et le capteur 2 sont implantés tous deux sur une partie fixe du véhicule, par exemple tous les deux dans le boîtier du projecteur P. Un dispositif installé de cette manière fonctionne exactement comme dans le premier mode de réalisation, et ne sera donc pas décrit en détail.

Selon les trois modes de réalisation décrits plus haut, il est bien clair que les positions relatives de l'émetteur et du capteur pourront être interchangées, l'émetteur 1 se trouvant par exemple placé au dessus du capteur 2. Il en résulte que l'on peut établir un schéma général du principe de fonctionnement du dispositif de correction automatique selon la présente invention, tel que celui qui est représenté sur la Figure 7.

On voit sur cette Figure un composant E-R, qui peut être un émetteur ou un récepteur, et un composant R-E, qui peut être un récepteur ou un émetteur respectivement. L'un est placé à une hauteur $H_1$, l'autre est placé à une hauteur $H_2$. Ils sont disposés dans des plans verticaux espacés horizontalement d'une distance d fixe. Ils présentent une orientation relative représentée par l'angle $\delta$, éventuellement variable. Moyennant la prise en compte des constantes géométriques supplémentaires d et $\delta$, caractéristiques du dispositif utilisé, il est possible de faire le même raisonnement et de réécrire des formules (1) à (10) ci dessus, pour arriver à une relation linéaire de la forme :

$$dc_1 - a \times dc_2 = b$$

qu'il convient de prendre en compte entre les positions $dc_1$ et $dc_2$, sur la surface photosensible du capteur, des images $I_1$ et $I_2$ des taches lumineuses $T_1$ et $T_2$ projetées par l'émetteur.

On pourra ainsi disposer l'émetteur ou le capteur en tout endroit désiré du véhicule, l'émetteur étant par exemple disposé au niveau du projecteur ou du pare-chocs avant du véhicule, tandis que le capteur pourra être disposé dans l'habitacle, par exemple derrière le rétroviseur.

On a donc bien réalisé un dispositif de correction automatique en temps réel de l'orientation en site de projecteurs de véhicule automobile lors des variations d'assiette de ce dernier. On pourra utiliser un seul dispositif pour les deux projecteurs du véhicule, auquel cas les signaux de commande émis par les moyens de traitement pour la correction de l'orientation d'un projecteur pourront être utilisés pour la correction simultanée de l'orientation de l'autre projecteur du véhicule. On pourra également utiliser un dispositif de correction associé à chaque projecteur. Selon les modes de réalisation représentés sur les Figures 1, 2, 5 et 6, le dispositif ne nécessite aucun câblage dans le véhicule autre que pour son installation dans le boîtier du projecteur, qui constitue ainsi une unité autonome à correction automatique incorporée. Le dispositif corrige l'orientation en site de projecteurs de véhicule automobile uniquement lors des variations d'assiette de ce dernier, et il est insensible aux variations de hauteur du véhicule.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi par exemple que l'on pourra utiliser deux émetteurs projetant chacun une tache lumineuse sur le sol. Ces deux émetteurs seront solidaires l'un de l'autre de manière à ce que les taches lumineuses soient formées par des rayons lumineux formant entre eux un angle constant et prédéterminé. On pourra par exemple utiliser des diodes électroluminescentes ou des diodes laser montées sur le même circuit, une optique appropriée formant les rayons émergeants. Les diodes laser émettront avantageusement un rayonnement infrarouge. De même, on pourra prévoir que les taches lumineuses soient émises en alternance, ou qu'elles soient émises de manière continue, leur intensité étant modulée selon une loi prédéterminée. On pourra encore prévoir de remplacer le capteur CCD ou CMOS par un circuit de positionnement analogique, du type PSD (Position Sensor Device).

## Revendications

**1.** Dispositif de correction automatique de l'orientation d'au moins un projecteur (P) de véhicule automobile (V) lors des variations d'assiette du véhicule automobile (V), comportant

- un émetteur (1) projetant sur le sol devant le véhicule (V) deux taches lumineuses ($T_1$, $T_2$) espacées dans une direction parallèle à l'axe longitudinal du véhicule (V),
- un capteur (2) de l'éclairement des taches lumineuses ($T_1$, $T_2$) comprenant un objectif (3) formant une image ($I_1$, $I_2$) des taches lumineuses ($T_1$, $T_2$) sur un récepteur (6) et fournissant pour chacun un signal de sortie ($dc_1$, $dc_2$),
- des moyens de traitement (5) propres à élaborer un signal de commande à partir du signal de sortie du capteur (2), et
- un actionneur (4) commandé par le signal de commande et apte à modifier l'orientation en site d'un réflecteur (R) du projecteur (P),

**caractérisé en ce que** le signal de commande de l'actionneur (4) est élaboré par les moyens de traitement (5) à partir d'une fonction linéaire des signaux de sortie ($dc_1$, $dc_2$) fournis par le capteur (2) pour chaque image ($I_1$, $I_2$) de chaque tache lumineuse ($T_1$, $T_2$).

2. Dispositif selon la revendication 1, **caractérisé en ce que** la fonction linéaire entre les signaux de sortie ($dc_1$, $dc_2$) du capteur (2) pour chaque image ($I_1$, $I_2$) de chaque tache lumineuse ($T_1$, $T_2$) est de la forme :

$$dc_1 - a \times dc_2 = K \times (\theta - \theta_0) + b$$

où a, b et $\theta_0$ sont des constantes caractéristiques de la géométrie du dispositif de correction, $\theta$ un angle représentatif de l'assiette du véhicule (V), et où K est une grandeur représentative de la hauteur (H) du véhicule (V).

3. Dispositif selon la revendication 1, **caractérisé en ce que** l'émetteur (1) et le capteur (2) sont fixes l'un par rapport à l'autre.

4. Dispositif selon la revendication 3, **caractérisé en ce que** l'émetteur (1) et le capteur (2) sont solidaires d'une partie mobile (R) du véhicule.

5. Dispositif selon la revendication 4, **caractérisé en ce que** la partie mobile (R) du véhicule est constituée par le réflecteur (R) d'un projecteur (P) du véhicule.

6. Dispositif selon la revendication 3, **caractérisé en ce que** l'émetteur (1) et le capteur (2) sont fixes par rapport au véhicule.

7. Dispositif selon la revendication 1, **caractérisé en ce que** l'émetteur (1) et le capteur (2) sont situés l'un sur une partie fixe du véhicule, l'autre sur une partie mobile du véhicule.

8. Dispositif selon l'une quelconque des revendications précédentes, **caractérisé en ce que** les taches lumineuses ($T_1$, $T_2$) définissent un segment de droite sensiblement parallèle à l'axe longitudinal du véhicule.

9. Dispositif selon l'une quelconque des revendications précédentes, **caractérisé en ce que** l'émetteur (1) et le capteur (2) sont situés sensiblement dans un même plan vertical.

10. Dispositif selon l'une quelconque des revendications précédentes, **caractérisé en ce que** la direction d'illumination de l'émetteur (1) et l'axe optique du capteur (2) sont contenus dans un même plan vertical parallèle à l'axe longitudinal du véhicule.

FIG.1

FIG.2

FIG.3

FIG.4

FIG.5

FIG.6

FIG.7

EP 1 201 498 A1

| Office européen des brevets | **RAPPORT DE RECHERCHE EUROPEENNE** | Numéro de la demande<br>EP 01 40 2781 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | FR 2 759 043 A (BOSCH GMBH ROBERT)<br>7 août 1998 (1998-08-07)<br>* page 6, ligne 17 - page 8, ligne 7 *<br>* page 9, ligne 4 - page 10, ligne 24 *<br>* page 11, ligne 14 - page 12, ligne 17 *<br>* page 14, ligne 9 - ligne 23 *<br>* figures 1-4,6 * | 1,3-5,<br>7-10 | B60Q1/08 |
| A | FR 2 707 390 A (VALEO VISION)<br>13 janvier 1995 (1995-01-13)<br>* page 1, ligne 1 - ligne 11 *<br>* page 1, ligne 27 - page 2, ligne 9 *<br>* page 3, ligne 20 - page 4, ligne 34 *<br>* page 5, ligne 21 - page 6, ligne 14 *<br>* page 8, ligne 32 - page 9, ligne 9 *<br>* figures 1,2 * | 1 | |
| | | | **DOMAINES TECHNIQUES RECHERCHES (Int.Cl.7)**<br><br>B60Q |

Le présent rapport a été établi pour toutes les revendications

| Lieu de la recherche | Date d'achèvement de la recherche | Examinateur |
|---|---|---|
| LA HAYE | 25 janvier 2002 | Cosnard, D |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 40 2781

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

25-01-2002

| Document brevet cité au rapport de recherche | | Date de publication | Membre(s) de la famille de brevet(s) | | Date de publication |
|---|---|---|---|---|---|
| FR 2759043 | A | 07-08-1998 | DE | 19704427 A1 | 13-08-1998 |
| | | | FR | 2759043 A1 | 07-08-1998 |
| | | | US | 6144159 A | 07-11-2000 |
| FR 2707390 | A | 13-01-1995 | FR | 2707390 A1 | 13-01-1995 |

EPO FORM P0460